# EUROPÄISCHE PATENTANMELDUNG

(11) **EP 3 260 737 A1**
(43) Veröffentlichungstag der Anmeldung: **27.12.2017**
(21) Anmeldenummer: 17171099.9
(22) Anmeldetag: 15.05.2017
(51) Int. Cl.: F16H 3/00

(54) **DOPPELKUPPLUNGSGETRIEBE MIT BRÜCKENKUPPLUNG**

(30) Priorität: 20.06.2016 DE 102016111282
(71) Anmelder: GETRAG B.V. & Co. KG, 74199 Untergruppenbach (DE)
(72) Erfinder: Hegerath, Andreas, 50126 Bergheim (DE); Schaller, Martin, 64732 Bad König (DE)
(74) Vertreter: Witte, Weller & Partner Patentanwälte mbB

(57) **Zusammenfassung**

Doppelkupplungsgetriebe (14) mit einer Eingangswellenanordnung, die eine erste Eingangswelle (24) und eine zweite Eingangswelle (28) aufweist, wobei die erste Eingangswelle (24) mit einer ersten Reibkupplung (K1) verbunden ist, wobei die zweite Eingangswelle (28) mit einer zweiten Reibkupplung (K2) verbunden ist und wobei die zweite Eingangswelle (28) als Hohlwelle um die erste Eingangswelle (24) herum angeordnet ist, einem ersten Teilgetriebe (26), das der ersten Eingangswelle (24) zugeordnet ist, und einem zweiten Teilgetriebe (30), das der zweiten Eingangswelle (28) zugeordnet ist, einer ersten Ausgangswelle (32) und einer zweiten Ausgangswelle (38), wobei an der ersten Ausgangswelle (32) ein erstes Abtriebszahnrad (34) festgelegt ist und wobei an der zweiten Ausgangswelle (38) ein zweites Abtriebszahnrad (40) festgelegt ist, einer Mehrzahl der Einrichtung von Gangstufen (1-8, R) dienenden Radsätzen, die jeweils die Eingangswellenanordnung (22) mit der ersten Ausgangswelle (32) und/oder mit der zweiten Ausgangswelle (38) verbinden, und wenigstens einer Brückenkupplung (E1, E2; K, R), die dazu ausgebildet ist, die erste Eingangswelle (24) und die zweite Eingangswelle (28) miteinander zu verbinden, um wenigstens eine Windungsgangstufe (1, R; 1, 8R) einzurichten. Dabei ist die Brückenkupplung (E1, E2; K, R) an einer zu den Ausgangswellen (32, 38) und der Eingangswellenanordnung (22) parallel versetzten Brückenkupplungswelle (106) angeordnet, die mit der ersten Eingangswelle (24) gekoppelt ist, wobei das erste Teilgetriebe (26) geraden Vorwärtsgangstufen (2, 4, 6, ..) zugeordnet ist.

## Beschreibung

Die vorliegende Erfindung betrifft ein Doppelkupplungsgetriebe mit einer Eingangswellenanordnung, die eine erste Eingangswelle und eine zweite Eingangswelle aufweist, wobei die erste Eingangswelle mit einer ersten Reibkupplung verbunden ist, wobei die zweite Eingangswelle mit einer zweiten Reibkupplung verbunden ist und wobei die zweite Eingangswelle als Hohlwelle um die erste Eingangswelle herum angeordnet ist, mit einem ersten Teilgetriebe, das der ersten Eingangswelle zugeordnet ist, mit einem zweiten Teilgetriebe, das der zweiten Eingangswelle zugeordnet ist, mit einer ersten Ausgangswelle und einer zweiten Ausgangswelle, wobei an der ersten Ausgangswelle ein erstes Abtriebszahnrad festgelegt ist und wobei an der zweiten Ausgangswelle ein zweites Abtriebszahnrad festgelegt ist, mit einer Mehrzahl der Einrichtung von Gangstufen dienenden Radsätzen, die jeweils die Eingangswellenanordnung mit der ersten Ausgangswelle und/oder mit der zweiten Ausgangswelle verbinden, und mit wenigstens einer Brückenkupplung, die dazu ausgebildet ist, die erste Eingangswelle und die zweite Eingangswelle miteinander zu verbinden, um wenigstens eine Windungsgangstufe einzurichten.

Doppelkupplungsgetriebe sind als automatisierte Stufengetriebe für die Anwendung in Kraftfahrzeugen, insbesondere Personenkraftwagen, allgemein bekannt. Der Aufbau eines Doppelkupplungsgetriebes basiert auf herkömmlichen manuellen Schaltgetrieben, die in Vorgelegebauweise ausgeführt sind. Eine eingangsseitige Doppelkupplung mit zwei unabhängig voneinander ansteuerbaren Reibkupplungen ermöglicht es, Antriebsleistung von einem Antriebsmotor, wie einem Verbrennungsmotor, alternativ über einen ersten Leistungsübertragungspfad oder über einen zweiten, hierzu parallelen Leistungsübertragungspfad zu führen. Der erste Leistungsübertragungszweig beinhaltet die erste Eingangswelle und das erste Teilgetriebe. Der zweite Leistungsübertragungspfad beinhaltet die zweite Eingangswelle und das zweite Teilgetriebe. Während der Fahrt ist eines der Teilgetriebe generell aktiv, nämlich dann, wenn Leistung über diesen Leistungsübertragungspfad übertragen wird. Das andere Teilgetriebe ist in diesem Fall inaktiv. In dem inaktiven Teilgetriebe kann eine Anschlussgangstufe vorgewählt werden. Durch überschneidende Betätigung der zwei eingangsseitigen Reibkupplungen kann dann die Antriebsleistung zugkraftunterbrechungsfrei von dem aktiven Teilgetriebe auf das andere Teilgetriebe umgelegt werden, so dass das vorher inaktive Teilgetriebe nun das aktive Teilgetriebe ist und umgekehrt.

Eines der Teilgetriebe beinhaltet dabei in der Regel die ungeraden Gangstufen. Das andere Teilgetriebe beinhaltet in der Regel die geraden Gangstufen. Folglich können Gangwechsel von 1 nach 2 oder von 2 nach 3 usw. jeweils zugkraftunterbrechungsfrei durchgeführt werden.

Zur Erzielung einer axial kompakten Bauweise ist es bekannt, einer Eingangswellenanordnung zwei Ausgangswellen zuzuordnen, so dass Radsätze zur Einrichtung von Gangstufen die Eingangswellenanordnung mit der einen Ausgangswelle und/oder mit der anderen Ausgangswelle verbinden. Auch ist es generell bekannt, bei derartigen 3-Wellengetrieben Radsätze von zwei unterschiedlichen Gangstufen in einer Radsatzebene anzuordnen (sogenannte Doppelnutzung).

Ferner ist es bei Doppelkupplungsgetrieben bekannt, die erste und die zweite Eingangswelle mittels einer Brückenkupplung zu verbinden. Hierdurch ist es möglich, wenigstens eine Windungsgangstufe einzurichten. Gegenüber anderen Gangstufen eines solchen Doppelkupplungsgetriebes, die durch Betätigen einer einzelnen Schaltkupplung ein- und auslegbar sind und die als Direkt-Gangstufen bezeichnet werden, ist es zur Einrichtung einer Windungsgangstufe generell erforderlich, zwei Kupplungen zu betätigen, nämlich die Brückenkupplung und eine weitere Schaltkupplung, die in der Regel auch einer Direkt-Gangstufe zugeordnet ist. Bei Einrichtung einer Windungsgangstufe fließt Leistung von einer Eingangswelle und dem zugeordneten Teilgetriebe über die Brückenkupplung hin zu dem anderen Teilgetriebe und von dort hin zu einer Ausgangswelle.

Generell ist es bekannt, Brückenkupplungen der oben beschriebenen Art an einer der Ausgangswellen anzuordnen. Die Anordnung erfolgt dabei in der Regel in einem axialen Übergangsbereich zwischen dem ersten und dem zweiten Teilgetriebe.

Aus dem Dokument EP 2 128 487 B1 ist es bekannt, zwei Brückenkupplungen an einer Brückenkupplungswelle anzuordnen, die parallel versetzt zu einer Eingangswellenanordnung und den zwei Ausgangswellen angeordnet ist. An der Brückenkupplungswelle sind dabei ein Losrad zum Einrichten einer Rückwärtsgangstufe sowie ein Losrad zum Einrichten einer Windungs-Vorwärtsgangstufe drehbar gelagert. Zudem ist die Innenwelle der zwei Eingangswellen über einen Konstanten-Radsatz mit der Brückenkupplungswelle verbunden, wobei die Innenwelle dem Teilgetriebe mit den ungeraden Gangstufen zugeordnet ist.

Aus dem Dokument DE 10 2014 213 459 A1 ist ein Doppelkupplungsgetriebe bekannt, bei dem zwei Brückenkupplungen ebenfalls an einer separaten Brückenkupplungswelle angeordnet sind. Die Brückenkupplungswelle ist wie zuvor über einen Konstanten-Radsatz mit der Eingangs-Hohlwelle verbunden. Die Eingangswellenanordnung und die zwei Ausgangswellen sind über eine Vielzahl von Radsätzen miteinander verbunden, so dass die Vorwärtsgangstufen 1 bis 8 als Direkt-Gangstufen eingerichtet sind. Über die eine Brückenkupplung können drei verschiedene Rückwärtsgangstufen als Windungsgangstufen eingerichtet werden. Über die andere Brückenkupplung können eine Windungsgangstufe 9 eingerichtet werden sowie eine Windungs-Kriechgangstufe, deren Übersetzung größer ist als jene der Direkt-Vorwärtsgangstufe 1.

Das Dokument DE 10 2011 056 517 A1 offenbart ein Getriebe, bei dem an einer die Eingangswelle bedarfsweise überbrückenden Parallelwelle zwei Losräder zum Einrichten einer Vorwärtsgangstufe und zum Einrichten einer Rückwärtsgangstufe vorgesehen sind. Als Windungsgangstufe ist eine Vorwärtsgangstufe 4 vorgesehen, wobei Schaltvorgänge, die diese Windungsgangstufe beinhalten, generell eine Zugkraftunterbrechung beinhalten, Eine derartige Zugkraftunterbrechung muss dann ggf. durch Ausnutzung einer anderen Gangstufe unterstützend verringert werden.

Das Dokument DE 100 15 336 A1 offenbart ein Doppelkupplungsgetriebe mit einer Parallelwelle zur bedarfsweisen Verbindung der zwei Eingangswellen, wobei das Getriebe axial relativ lang baut und eine einzelne Ausgangswelle aufweist.

Vor dem obigen Hintergrund ist es eine Aufgabe der Erfindung, ein verbessertes Doppelkupplungsgetriebe anzugeben.

Die obige Aufgabe wird bei dem eingangs genannten Doppelkupplungsgetriebe gemäß einem ersten Aspekt der Erfindung dadurch gelöst, dass die Brückenkupplung an einer zu den Ausgangswellen und der Eingangswellenanordnung parallel versetzten Brückenkupplungswelle angeordnet ist, die mit der ersten Eingangswelle gekoppelt ist, wobei das erste Teilgetriebe geraden Vorwärtsgangstufen zugeordnet ist.

In der Eingangswellenanordnung ist die erste Eingangswelle als Innenwelle ausgebildet und die zweite Eingangswelle als hierzu konzentrische Hohlwelle. Das erste Teilgetriebe, das an die erste Eingangswelle angeschlossen ist, ist dabei den geraden Vorwärtsgangstufen zugeordnet, also insbesondere den Gangstufen 2, 4, 6. Insbesondere weist das erste Teilgetriebe die Vorwärtsgangstufen 2, 4, 6 als Direkt-Gangstufen auf, die jeweils durch Betätigen einer einzelnen Schaltkupplung ein- und auslegbar sind. Die Schaltkupplungen sind vorzugsweise Synchron-Schaltkupplungen.

Das zweite Teilgetriebe ist in axialer Richtung dabei zwischen dem ersten Teilgetriebe und der Doppelkupplungsanordnung angeordnet. Das erste und das zweite Abtriebszahnrad sind in axialer Richtung vorzugsweise zwischen dem zweiten Teilgetriebe und der Doppelkupplungsanordnung angeordnet, die aus der ersten Reibkupplung und der zweiten Reibkupplung besteht.

Das zweite Teilgetriebe ist vorzugsweise den ungeraden Vorwärtsgangstufen zugeordnet und weist zu diesem Zweck vorzugsweise Direkt-Vorwärtsgangstufen 3, 5, 7 auf, die jeweils mittels einer einzelnen Schaltkupplung ein- und auslegbar sind.

Von sämtlichen Direkt-Vorwärtsgangstufen hat die Vorwärtsgangstufe 2 des ersten Teilgetriebes die höchste Übersetzung.

Das Doppelkupplungsgetriebe ist vorzugsweise dazu ausgelegt, genau acht Vorwärtsgangstufen und eine Rückwärtsgangstufe einzurichten.

Die Brückenkupplungswelle ist mit der ersten Eingangswelle gekoppelt. Unter einer Kopplung soll vorliegend, sofern nichts anderes erwähnt ist, eine zwangläufige Kopplung verstanden werden, derart, dass eine Drehung der ersten Eingangswelle zwangläufig eine Drehung der Brückenkupplungswelle zur Folge hat, und vorzugsweise auch umgekehrt.

Durch diese Maßnahme ist es möglich, ein Festrad eines Radsatzes mit der höchsten Übersetzung (vorliegend der Radsatz für die Direkt-Vorwärtsgangstufe 2) mit der Innenwelle der Eingangswellenanordnung zu verbinden. Dies hat zum Vorteil, dass der Außendurchmesser dieses Festrades vergleichsweise klein ausgebildet sein kann, so dass mit dieser Direkt-Vorwärtsgangstufe eine hohe Übersetzung eingerichtet werden kann, im Vergleich zu einem Fall, bei dem ein solches Festrad an der Hohlwelle einer solchen Eingangswellenanordnung festzulegen ist.

Demzufolge kann das erfindungsgemäße Doppelkupplungsgetriebe gemäß dem ersten Aspekt der Erfindung eine hohe Spreizung haben.

An der Brückenkupplungswelle kann eine einzelne Brückenkupplung angeordnet sein. Besonders bevorzugt ist es jedoch, wenn zwei Brückenkupplungen an der Brückenkupplungswelle angeordnet sind, von denen eine wenigstens einer Vorwärts-Windungsgangstufe zugeordnet ist und von denen die andere wenigstens einer Rückwärts-Windungsgangstufe zugeordnet ist. Ferner ist es bevorzugt, wenn an der Brückenkupplungswelle genau drei Zahnräder gelagert sind, von denen vorzugsweise zwei als Losräder und eines als Festrad ausgebildet ist.

Unter einer Windungsgangstufe wird vorliegend, im Gegensatz zu einer Direkt-Gangstufe, eine solche Gangstufe verstanden, die durch Betätigung von zwei Schaltkupplungen ein- und auslegbar ist. Insbesondere ist eine Windungsgangstufe durch Betätigung der zugeordneten Brückenkupplung und einer Schaltkupplung von einem der Teilgetriebe ein- und auszulegen, wobei die Schaltkupplung des Teilgetriebes vorzugsweise einer Direkt-Gangstufe zugeordnet ist, so dass diese Schaltkupplung auch zur Betätigung dieser Direkt-Gangstufe dienen kann, dann nämlich, wenn die Brückenkupplung geöffnet ist.

Die Aufgabe wird somit vollkommen gelöst.

Gemäß einer bevorzugten Ausführungsform ist eine Vorwärtsgangstufe 1 als Windungsgangstufe ausgebildet, bei der Antriebsleistung über einen der Vorwärtsgangstufe 2 zugeordneten Radsatz fließt. Die Vorwärtsgangstufe 2 ist dabei als Direkt-Gangstufe ausgebildet. Der Vorwärtsgangstufe 1 ist dabei einer Brückenkupplung an der Brückenkupplungswelle zugeordnet.

In entsprechender Weise ist es bevorzugt, wenn eine Rückwärtsgangstufe als Windungsgangstufe ausgebildet ist, bei der Antriebsleistung über einen Radsatz fließt, der einer Direkt-Vorwärtsgangstufe zugeordnet ist, insbesondere der Direkt-Vorwärtsgangstufe 2.

Die Vorwärtsgangstufe 1 und die Rückwärtsgangstufe sind jene Gangstufen, die im Fahrbetrieb eines Kraftfahrzeuges vergleichsweise selten verwendet werden, nämlich ausschließlich zum Anfahren bzw. zum Rückwärtsfahren. Demzufolge hat die Tatsache, dass diese Vorwärtsgangstufe(n) als Windungsgangstufe(n) ausgebildet ist bzw. sind, im Wesentlichen keinen negativen Einfluss auf den Gesamtwirkungsgrad. Denn bei Einrichtung einer Gangstufe als Windungsgangstufe kommen mehr Zahnräder in Eingriff als bei einer Direkt-Gangstufe, so dass der Wirkungsgrad tendenziell etwas schlechter ist als bei einer Direkt-Gangstufe.

Gemäß einer weiteren bevorzugten Ausführungsform ist ein Losrad eines Radsatzes zur Einrichtung einer Rückwärtsgangstufe zwangläufig mit einem Zahnrad gekoppelt, das an einer Eingangswelle festgelegt ist und/oder das zur Einrichtung einer ungeraden Vorwärtsgangstufe dient.

Die Eingangswelle, an der das Zahnrad festgelegt ist, ist vorzugsweise die zweite Eingangswelle des zweiten Teilgetriebes. Dies ermöglicht es, dass Leistung beim Einrichten der Rückwärtsgangstufe über dieses Zahnrad des zweiten Teilgetriebes und über einen Radsatz des ersten Teilgetriebes fließen kann.

Dabei ist es von besonderem Vorzug, wenn das Zahnrad mit einem an einer Drehrichtungsumkehrwelle drehbar gelagerten Drehrichtungsumkehrrad in Eingriff steht, das wiederum mit dem Losrad des Radsatzes zur Einrichtung der Rückwärtsgangstufe in Eingriff steht.

Ein derartiges Drehrichtungsumkehrrad kann axial kompakt in dem Gehäuse des Doppelkupplungsgetriebes untergebracht werden. Die axiale Länge der Drehrichtungsumkehrwelle liegt vorzugsweise in der gleichen Größenordnung wie die axiale Breite des Drehrichtungsumkehrrades und ist vorzugsweise kleiner als die axiale Länge der Brückenkupplungswelle. Die axiale Länge der Brückenkupplungswelle ist wiederum vorzugsweise kleiner als die axiale Länge der Ausgangswellen und/oder kleiner als die axiale Länge der ersten Eingangswelle.

Auf diese Weise kann eine Drehrichtungsumkehr zum Einrichten der Rückwärtsgangstufe auf axial kompakte Art und Weise eingerichtet werden. Zudem ist es über das Drehrichtungsumkehrrad möglich, eine Übersetzung für die Rückwärtsgangstufe geeignet anzupassen, insbesondere an eine Übersetzung eines Radsatzes in dem ersten Teilgetriebe, über das die Antriebsleistung bei Einrichtung der Rückwärtsgangstufe fließt.

Das Drehrichtungsumkehrrad kann ein einfaches Zahnrad sein, kann jedoch auch ein Doppel-Losrad sein, das aus zwei axial nebeneinander angeordneten und starr miteinander verbundenen Zahnrädern besteht. In diesem Fall ist es bevorzugt, wenn das eine dieser Zahnräder des Doppel-Drehrichtungsumkehrrades mit dem Losrad des Radsatzes zur Einrichtung der Rückwärtsgangstufe in Eingriff steht. In diesem Fall ist es ferner bevorzugt, wenn das andere Zahnrad des Doppel-Drehrichtungsumkehrrades mit einem Zahnrad in Eingriff steht, das fest mit einer Eingangswelle verbunden ist und das vorzugsweise nicht zur Einrichtung einer Vorwärtsgangstufe dient. In diesem Fall kann die Übersetzung der Rückwärtsgangstufe unabhängig von Übersetzungen der Vorwärtsgangstufen des Doppelkupplungsgetriebes eingerichtet werden.

Insgesamt kann mit dem oben beschriebenen Doppelkupplungsgetriebe eine axial kompakte Bauweise realisiert werden. Vorzugsweise ist die Anzahl der Radsatzebenen sechs. Dies bedeutet, dass mit sechs Radsatzebenen vorzugsweise genau acht Vorwärtsgangstufen und eine Rückwärtsgangstufe einrichtbar sind. Die zugehörigen Schaltkupplungen zum Einrichten der Direkt-Gangstufen sind vorzugsweise an der ersten und der zweiten Ausgangswelle miteinander axial ausgerichtet, derart, dass Schaltkupplungspakete, die jeweils eine oder zwei Schaltkupplungen beinhalten, in axialer Richtung zwischen zwei Radsatzebenen angeordnet sind.

Die axiale Gesamtlänge aller Schaltkupplungspakete kann durch eine geschickte Anordnung vorzugsweise etwa gleich der 1,5-fachen Länge eines Schaltkupplungspaketes sein.

Zur Einrichtung einer Vorwärtsgangstufe 8 kann ein dedizierter Radsatz vorgesehen sein, so dass die Vorwärtsgangstufe 8 als Direkt-Vorwärtsgangstufe einrichtbar ist. Die Vorwärtsgangstufe 8 kann jedoch auch als Windungsgangstufe eingerichtet sein.

Gemäß einer weiteren bevorzugten Ausführungsform, die in Verbindung mit dem Oberbegriff des Anspruchs 1 eine eigene Erfindung darstellt, ist ein Parksperrenrad des Doppelkupplungsgetriebes in einer Radsatzebene angeordnet, die unmittelbar benachbart ist zu dem ersten und dem zweiten Abtriebszahnrad.

Die Radsatzebene, innerhalb der das Parksperrenrad angeordnet ist, beinhaltet wenigstens ein Festrad und ein Losrad zur Einrichtung einer Rückwärtsgangstufe und/oder einer Vorwärtsgangstufe.

Von besonderem Vorzug ist es, wenn in der Radsatzebene ein Festrad und ein Losrad zum Einrichten einer Direkt-Vorwärtsgangstufe 3 angeordnet sind, sowie vorzugsweise ein Losrad und vorzugsweise ein Drehrichtungsumkehrrad zur Einrichtung einer Rückwärtsgangstufe.

Auf diese Weise kann insgesamt ein axial kompakter Aufbau des Doppelkupplungsgetriebes realisiert werden.

Gemäß einer weiteren bevorzugten Ausführungsform, die in Verbindung mit dem Oberbegriff des Anspruchs 1 eine eigene Erfindung darstellt, sind an der ersten Ausgangswelle, von einem Eingang des Doppelkupplungsgetriebes aus gesehen, ein Losrad für eine Vorwärtsgangstufe 3, ein Losrad für eine Vorwärtsgangstufe 5, ein Losrad für eine Vorwärtsgangstufe 6 und ein Losrad für eine Vorwärtsgangstufe 2 angeordnet.

Die Losräder für die Vorwärtsgangstufen 3 und 5 sind dabei dem zweiten Teilgetriebe zugeordnet. Die Losräder für die Vorwärtsgangstufen 6 und 2 sind dem ersten Teilgetriebe zugeordnet. Die Vorwärtsgangstufen 2, 3, 5, 6 sind dabei vorzugsweise jeweils als Direkt-Vorwärtsgangstufen ausgebildet.

Zwischen dem Losrad für die Vorwärtsgangstufe 3 und einer Doppelkupplungsanordnung des Doppelkupplungsgetriebes ist vorzugsweise ein erstes Abtriebszahnrad angeordnet, das mit einem Abtriebsglied verbindbar ist, das zwangläufig mit einem Differential zum Verteilen von Antriebsleistung auf zwei angetriebene Räder gekoppelt ist.

Der oben genannte Radsatzaufbau mit der Losradreihenfolge 3, 5, 6, 2 für die Vorwärtsgangstufen 3, 5, 6 und 2 hat unter anderem den Vorteil, dass die Direkt-Vorwärtsgangstufen mit den jeweils höchsten Übersetzungen in den zwei Teilgetrieben jeweils im axialen Endbereich des Doppelkupplungsgetriebes angeordnet sind, so dass die dort auftretenden höchsten Kräfte durch geeignete Drehlagerungen der ersten Ausgangswelle an diesen Stellen abgestützt werden können.

Dabei ist es von Vorteil, wenn an der zweiten Ausgangswelle, von einem Eingang des Doppelkupplungsgetriebes aus gesehen, ein Parksperrenrad, ein Losrad für eine Vorwärtsgangstufe 7, ein Losrad für eine Vorwärtsgangstufe 4 und ein Losrad für eine Vorwärtsgangstufe 8 angeordnet sind.

Bei dieser Ausführungsform sind die Vorwärtsgangstufen 7, 4, 8 jeweils vorzugsweise als Direkt-Vorwärtsgangstufen ausgebildet, die jeweils mittels einer einzelnen Schaltkupplung ein- und auslegbar sind.

Das Parksperrenrad liegt vorzugsweise in einer Radsatzebene mit dem Losrad für die Vorwärtsgangstufe 3. Das Losrad für die Vorwärtsgangstufe 7 liegt vorzugsweise in einer Radsatzebene mit dem Losrad für die Vorwärtsgangstufe 5. Die Losräder für die Vorwärtsgangstufen 6, 2 und 8 liegen vorzugsweise in unterschiedlichen Radsatzebenen, so dass die Übersetzungen hierfür optimal wählbar sind.

Ein erstes Schaltkupplungspaket ist vorzugsweise zwischen dem Losrad für die Vorwärtsgangstufe 2 und dem Losrad für die Vorwärtsgangstufe 6 angeordnet. Ein zweites Schaltkupplungspaket ist vorzugsweise axial zwischen dem Losrad für die Vorwärtsgangstufe 5 und dem Losrad für die Vorwärtsgangstufe 3 angeordnet.

Ein drittes Schaltkupplungspaket ist vorzugsweise in axialer Richtung zwischen dem Losrad für die Vorwärtsgangstufe 8 und dem Losrad für die Vorwärtsgangstufe 4 angeordnet.

Eine weitere Schaltkupplung ist vorzugsweise zwischen dem Losrad für die Vorwärtsgangstufe 7 und dem Parksperrenrad angeordnet. Ein weiteres Schaltkupplungspaket ist vorzugsweise zwischen einem Brücken-Losrad für eine Rückwärtsgangstufe und einem Brücken-Losrad für eine Vorwärtsgangstufe an der Brückenkupplungswelle angeordnet.

Das Schaltkupplungspaket zwischen den Losrädern der Vorwärtsgangstufen 4, 8 überschneidet sich axial vorzugsweise mit der Radsatzebene für die Vorwärtsgangstufe 2. Das Schaltkupplungspaket zwischen den Losrädern der Vorwärtsgangstufen 2 und 6 überschneidet sich in axialer Richtung vorzugsweise mit einer Radsatzebene für die Vorwärtsgangstufe 4.

Insgesamt ist es vorteilhaft, wenn ein Losrad für die Vorwärtsgangstufe 5 und ein Losrad für die Vorwärtsgangstufe 7 in einer Radsatzebene angeordnet sind, so dass ein Festrad, das mit diesen zwei Losrädern in Eingriff steht und an der zweiten Eingangswelle festgelegt ist, sowohl zum Einrichten der Vorwärtsgangstufe 5 als auch zum Einrichten der Vorwärtsgangstufe 7 genutzt werden kann (sogenannte Doppelnutzung).

Gemäß einer weiteren bevorzugten Ausführungsform, die in Verbindung mit dem Oberbegriff des Anspruchs 1 eine eigene Erfindung darstellt, sind an der ersten Ausgangswelle, von einem Eingang des Doppelkupplungsgetriebes aus gesehen, ein Parksperrenrad, ein Losrad für eine Vorwärtsgangstufe 7 und ein Losrad für eine Vorwärtsgangstufe 2 angeordnet.

Bei diesem alternativen Radsatzaufbau ist vorzugsweise zwischen dem Parksperrenrad und einer Doppelkupplungsanordnung ein erstes Abtriebszahnrad an der ersten Ausgangswelle angeordnet.

Ferner ist es bei dieser alternativen Ausführungsform eines Doppelkupplungsgetriebes bevorzugt, wenn an der zweiten Ausgangswelle, von einem Eingang des Doppelkupplungsgetriebes aus gesehen, ein Losrad für eine Vorwärtsgangstufe 3, ein Losrad für eine Vorwärtsgangstufe 5, ein Losrad für eine Vorwärtsgangstufe 4 und ein Losrad für eine Vorwärtsgangstufe 6 angeordnet sind.

Bei diesem alternativen Radsatzaufbau sind die Vorwärtsgangstufen 2, 3, 4, 5, 6, 7 jeweils als Direkt-Vorwärtsgangstufen ausgebildet.

Eine Vorwärtsgangstufe 8 lässt sich vorzugsweise dadurch einrichten, dass eine Vorwärts-Brückenkupplung sowie eine der Vorwärtsgangstufe 7 zugeordnete Schaltkupplung geschlossen werden, so dass die Vorwärtsgangstufe 8 als Windungsgangstufe eingelegt wird.

Auch die Vorwärtsgangstufe 1 und die Rückwärtsgangstufe R werden, wie bei dem vorher genannten Radsatzlayout vorzugsweise als Windungsgangstufen realisiert, in beiden Fällen vorzugsweise über einen Radsatz, der einer Direkt-Vorwärtsgangstufe 2 zugeordnet ist, und über eine jeweilige Brückenkupplung an einer Brückenkupplungswelle.

Bei der alternativen Ausführungsform eines Radsatzlayouts ist ein erstes Schaltkupplungspaket in axialer Richtung zwischen dem Losrad für die Vorwärtsgangstufe 7 und dem Losrad für die Vorwärtsgangstufe 2 angeordnet. Axial hiermit ausgerichtet ist ein weiteres Schaltkupplungspaket, das den Losrädern für die Vorwärtsgangstufen 3 und 5 zugeordnet ist.

Ferner ist es bevorzugt, wenn axial hiermit ausgerichtet weiterhin wenigstens eine Schaltkupplung für ein Brücken-Losrad an einer parallel versetzten Brückenkupplungswelle angeordnet ist.

Ein weiteres Schaltkupplungspaket ist bei diesem alternativen Radsatzlayout vorzugsweise zwischen den Losrädern für die Vorwärtsgangstufen 4 und 6 angeordnet.

Das Schaltkupplungspaket für die Vorwärtsgangstufen 4 und 6 überschneidet sich in axialer Richtung vorzugsweise mit einer Radsatzebene für die Vorwärtsgangstufe 2.

Bei dem alternativen Radsatzlayout ist es bevorzugt, wenn zwischen einer dem Getriebeeingang nächstliegenden Radsatzebene, die auch zur Einrichtung wenigstens einer Vorwärtsgangstufe dient, in axialer Richtung eine Radsatzebene für die Vorwärtsgangstufe 7, eine Radsatzebene für die Vorwärtsgangstufe 5, eine Radsatzebene für die Vorwärtsgangstufe 4 angeordnet sind, wobei eine Radsatzebene für die Vorwärtsgangstufe 2 zwischen den Radsatzebenen für die Vorwärtsgangstufen 4 und 6 angeordnet ist.

Insgesamt ist es bei sämtlichen Ausführungsformen bevorzugt, wenn die wenigstens eine Brückenkupplung an einer zu den Ausgangswellen und der Eingangswellenanordnung parallel versetzten Brückenkupplungswelle angeordnet ist, wobei an der Brückenkupplungswelle ein Brücken-Losrad für eine Rückwärtsgangstufe, ein Brücken-Losrad für eine Vorwärtsgangstufe und ein Brücken-Festrad angeordnet sind, und zwar vorzugsweise in der Reihenfolge von einem Eingang des Doppelkupplungsgetriebes aus gesehen, wobei das Brücken-Festrad mit einem Festrad in Eingriff steht, das mit der ersten Eingangswelle fest verbunden ist.

Bevorzugt ist es, wenn das Festrad, das mit der ersten Eingangswelle fest verbunden ist und mit dem Brücken-Festrad in Eingriff steht, ein Festrad eines Radsatzes für die Vorwärtsgangstufe 6 ist.

Hierdurch können die Übersetzungen für die Windungsgangstufe optimal realisiert werden.

Das Brücken-Losrad für die Rückwärtsgangstufe steht vorzugsweise mit einem Drehrichtungsumkehrrad in Eingriff, das wiederum mit einem Festrad eines Direkt-Gangstufenradsatzes des zweiten Teilgetriebes in Eingriff steht, insbesondere mit einem Festrad des Radsatzes für die Vorwärtsgangstufe 3.

Unter "in Eingriff Stehen" wird vorliegend insbesondere ein Kämmen von Zahnrädern verstanden.

Gemäß einer weiteren insgesamt bevorzugten Ausführungsform ist dabei ein Radsatz für eine Vorwärtsgangstufe 3 vorzugsweise benachbart zu einem Getriebeeingang angeordnet, insbesondere benachbart zu einer Abtriebszahnradebene, in der das erste und das zweite Abtriebszahnrad angeordnet sind.

Ferner ist es insgesamt vorteilhaft, wenn das erste Teilgetriebe den geraden Vorwärtsgangstufen zugeordnet ist, wobei das erste Teilgetriebe ausschließlich Radsatzebenen enthält, die jeweils einen einzelnen Radsatz mit einem Festrad und einem einzelnen Losrad aufweisen, das mit dem Festrad in Eingriff steht.

Demzufolge kann das erste Teilgetriebe drei und vier Radsatzebenen beinhalten, je nachdem ob eine Vorwärtsgangstufe 8 als Direkt-Gangstufe oder als Windungsgangstufe ausgeführt ist. Durch die Maßnahme, dass das erste Teilgetriebe ausschließlich Radsatzebenen mit jeweils einzelnen Radsätzen beinhaltet, können die Übersetzungen der zugeordneten Gangstufen optimal gewählt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Darstellung einer ersten Ausführungsform eines erfindungsgemäßen Doppelkupplungsgetriebes;
- Figur 2: schematische Ansichten entlang der Radsatzebenen für die Vorwärtsgangstufe 3 und für die Vorwärtsgangstufe 5 des Doppelkupplungsgetriebes der Fig. 1;
- Figur 3: ein Kupplungs-Schaltdiagramm für die Vorwärtsgangstufen 1 bis 8 und R des Doppelkupplungsgetriebes der Fig. 1 und 2;
- Figur 4: eine schematische Darstellung einer weiteren Ausführungsform eines erfindungsgemäßen Doppelkupplungsgetriebes;
- Figur 5: schematische Ansichten entlang der Radsatzebenen für die Vorwärtsgangstufe 3 und für die Vorwärtsgangstufe 5 des Doppelkupplungsgetriebes der Fig. 4;
- Figur 6: ein Kupplungs-Schaltdiagramm für die Vorwärtsgangstufen 1 bis 8 und R des Doppelkupplungsgetriebes der Fig. 4 und 5;

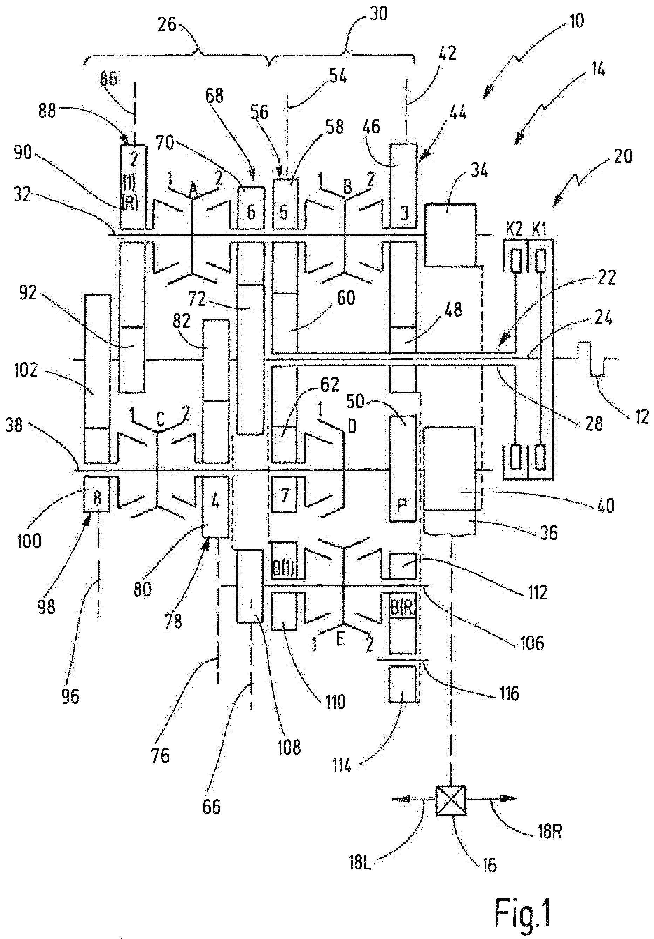

In Fig. 1 ist ein Antriebsstrang für ein Kraftfahrzeug schematisch dargestellt und generell mit 10 bezeichnet.

Der Antriebsstrang 10 beinhaltet einen Antriebsmotor 12, wie beispielsweise einen Verbrennungsmotor oder eine Hybrid-Antriebseinheit, wobei ein Ausgang des Antriebsmotors 12 mit einem Eingang eines Doppelkupplungsgetriebes 14 verbunden ist. Ein Ausgang des Doppelkupplungsgetriebes 14 ist mit einem Differential 16 verbunden, mittels dessen Antriebsleistung auf angetriebene Räder 18L, 18R verteilbar ist.

Der Antriebsstrang ist insbesondere für den Einbau vorne quer in einem Kraftfahrzeug ausgelegt.

Das Doppelkupplungsgetriebe 14 weist eine Reibkupplungsanordnung 20 auf, die eine erste Reibkupplung K1 und eine zweite Reibkupplung K2 beinhaltet, die jeweils als nasslaufende Lamellenkupplungen ausgebildet sein können. Die Reibkupplungen K1, K2 weisen ein gemeinsames Eingangsglied auf, das mit dem Antriebsmotor 12 verbunden ist.

Das Doppelkupplungsgetriebe 14 beinhaltet ferner eine Eingangswellenanordnung 22 mit einer ersten Eingangswelle 24 in Form einer Innenwelle, die fest mit einem Ausgangsglied der ersten Reibkupplung K1 verbunden ist. Der ersten Eingangswelle 24 ist ein erstes Teilgetriebe 26 für die geraden Gangstufen 2, 4, 6 zugeordnet, die jeweils als Direkt-Gangstufen ausgebildet sind.

Die Eingangswellenanordnung 22 weist eine zweite Eingangswelle 28 in Form einer konzentrisch zu der ersten Eingangswelle 24 ausgerichteten Hohlwelle 28 auf. Die zweite Eingangswelle 28 ist fest mit einem Ausgangsglied der zweiten Reibkupplung K2 verbunden. Ferner ist die zweite Eingangswelle 28 einem zweiten Teilgetriebe 30 zugeordnet, das den ungeraden Gangstufen des Doppelkupplungsgetriebes zugeordnet ist, insbesondere den Gangstufen 3, 5, 7, die jeweils als Direkt-Gangstufen ausgebildet sind.

Das Doppelkupplungsgetriebe 14 beinhaltet ferner eine erste Abtriebswelle 32, an der ein erstes Abtriebszahnrad 34 festgelegt ist. Das erste Abtriebszahnrad 34 steht in Eingriff mit einem Abtriebsglied 36, das zwangläufig mit einem Eingangsglied des Differentials 16 gekoppelt sein kann oder durch ein Eingangsglied des Differentials 16 gebildet sein kann.

Das Doppelkupplungsgetriebe 14 beinhaltet ferner eine zweite Ausgangswelle 38, an der ein zweites Abtriebszahnrad 40 festgelegt ist. Das zweite Abtriebszahnrad 40 steht ebenfalls in Eingriff mit dem Abtriebsglied 36. Das erste Abtriebszahnrad 34, das zweite Abtriebszahnrad 40 und das Abtriebsglied 36 liegen in einer gemeinsamen, nicht näher bezeichneten Abtriebszahnradebene, die benachbart ist zu der Reibkupplungsanordnung 20.

Auf der der Reibkupplungsanordnung 20 axial gegenüberliegenden Seite der Abtriebszahnradebene ist eine Mehrzahl von Radsatzebenen angeordnet, die nachfolgend in ihrer Reihenfolge von dem Getriebeeingang aus gesehen erläutert werden.

Unmittelbar benachbart zu der Abtriebszahnradebene ist eine erste Radsatzebene 42, die einen Radsatz 44 für eine Vorwärtsgangstufe 3 beinhaltet. Der Radsatz 44 für die Vorwärtsgangstufe 3 beinhaltet ein Losrad 46 für die Vorwärtsgangstufe 3, das an der ersten Ausgangswelle 32 drehbar gelagert ist und das mittels einer Schaltkupplung B2 mit der ersten Ausgangswelle 32 verbindbar ist. Der Radsatz 44 beinhaltet ferner ein Festrad 48, das mit der zweiten Eingangswelle 28 fest verbunden ist. In der ersten Radsatzebene 42 liegt ferner ein Parksperrenrad 50, das starr mit der zweiten Ausgangswelle 38 verbunden ist.

Die erste Radsatzebene 42 ist dem zweiten Teilgetriebe 30 zugeordnet.

Das zweite Teilgetriebe 30 beinhaltet eine zweite Radsatzebene 54, in der ein Radsatz 56 für eine Vorwärtsgangstufe 5 und eine Vorwärtsgangstufe 7 angeordnet ist. Der Radsatz 56 beinhaltet ein Losrad 58 für die Vorwärtsgangstufe 5, das drehbar an der ersten Ausgangswelle 32 gelagert ist und das mittels einer Schaltkupplung B1 mit der ersten Ausgangswelle 32 verbindbar ist. Die Schaltkupplung B1 und die Schaltkupplung B2 bilden ein Schaltkupplungspaket, das zwischen den Losrädern 58, 46 angeordnet ist.

Der Radsatz 56 beinhaltet ferner ein Festrad 60, das an der zweiten Eingangswelle 24 festgelegt ist, sowie ein Losrad 62 für eine Vorwärtsgangstufe 7. Das Losrad 62 ist drehbar an der zweiten Ausgangswelle 38 gelagert und ist mittels einer Schaltkupplung D1 mit der zweiten Ausgangswelle 38 verbindbar. Die Schaltkupplung D1 ist als Einfach-Schaltkupplung ausgebildet und ist axial zwischen dem Losrad 62 und dem Parksperrenrad 50 angeordnet.

Das erste Teilgetriebe 26 beinhaltet benachbart zu der zweiten Radsatzebene 54 eine dritte Radsatzebene 66. In der dritten Radsatzebene 66 ist ein Radsatz 68 für eine Vorwärtsgangstufe 6 angeordnet. Der Radsatz 68 beinhaltet ein Losrad 70 für die Vorwärtsgangstufe 6, das drehbar an der ersten Ausgangswelle 32 gelagert ist und das mittels einer Schaltkupplung A2 mit der ersten Ausgangswelle 32 verbindbar ist. Der Radsatz 68 beinhaltet ferner ein Festrad 72, das fest mit der ersten Eingangswelle 24 verbunden ist.

Das erste Teilgetriebe 26 beinhaltet ferner eine vierte Radsatzebene 76, die benachbart ist zu der dritten Radsatzebene 66 und die einen Radsatz 78 für eine Vorwärtsgangstufe 4 beinhaltet. Der Radsatz 78 weist ein Losrad 80 für die Vorwärtsgangstufe 4 auf, das drehbar an der zweiten Ausgangswelle 38 gelagert ist und das mittels einer Schaltkupplung C2 mit der zweiten Ausgangswelle 38 verbindbar ist. Der Radsatz 78 beinhaltet ferner ein Festrad 82 für die Vorwärtsgangstufe 4, das fest an der ersten Eingangswelle 24 festgelegt ist. Die Schaltkupplung A2 für die Vorwärtsgangstufe 6 ist axial überschneidend mit der vierten Radsatzebene 76 ausgerichtet.

Das erste Teilgetriebe 26 beinhaltet ferner eine fünfte Radsatzebene 86, die einen Radsatz 88 für eine Vorwärtsgangstufe 2 aufweist. Der Radsatz 88 weist ein Losrad 90 für die Vorwärtsgangstufe 2 auf, das drehbar an der ersten Ausgangswelle 32 gelagert ist und das mittels einer Schaltkupplung A1 mit der ersten Ausgangswelle 32 verbindbar ist. Der Radsatz 88 beinhaltet ferner ein Festrad 92 für die Vorwärtsgangstufe 2, das an der ersten Eingangswelle 24 festgelegt ist.

Die Schaltkupplung A1 und die Schaltkupplung A2 für die Vorwärtsgangstufen 2, 6 sind zu einem Schaltkupplungspaket integriert, das axial zwischen den Losrädern 90, 70 angeordnet ist.

Ferner beinhaltet das erste Teilgetriebe 26 eine sechste Radsatzebene 96, die einen Radsatz 98 für eine Vorwärtsgangstufe 8 aufweist. Der Radsatz 98 beinhaltet ein Losrad 100, das drehbar an der zweiten Ausgangswelle gelagert ist und das mittels einer Reibkupplung C1 mit der zweiten Ausgangswelle 38 verbindbar ist. Der Radsatz 98 weist ferner ein Festrad 102 für die Vorwärtsgangstufe 8 auf, das fest mit der ersten Eingangswelle 24 verbunden ist.

Die Schaltkupplungen C1, C2 sind in ein Schaltkupplungspaket integriert, das in axialer Richtung zwischen den Losrädern 100, 80 der Vorwärtsgangstufen 8, 4 angeordnet ist. Die Schaltkupplung C1 ist in axialer Richtung überschneidend mit der fünften Radsatzebene 86 angeordnet.

Die Vorwärtsgangstufen 2, 3, 4, 5, 6, 7, 8 sind jeweils als Direkt-Gangstufen ausgebildet, die mittels jeweiliger Schaltkupplungen A1, B2, C2, B1, A2, D1, C1 ein- und auslegbar sind.

Das Parksperrenrad 50 ist zur Erzielung einer axial kompakten Bauweise in die Radsatzebene 42 integriert.

Ferner beinhaltet das Doppelkupplungsgetriebe 14 eine Brückenkupplungswelle 106, die parallel versetzt zu der Eingangswellenanordnung 22 und zu den Ausgangswellen 32, 38 angeordnet ist.

An der Brückenkupplungswelle 106 ist ein Brücken-Festrad 108 festgelegt, das in der dritten Radsatzebene 66 angeordnet ist und das in Eingriff steht mit dem Festrad 72 für die Vorwärtsgangstufe 6.

In axialer Richtung zwischen dem Brücken-Festrad 108 und der Abtriebszahnradebene sind ein Brücken-Losrad 110 für eine Vorwärtsgangstufe sowie ein Brücken-Losrad 112 für eine Rückwärtsgangstufe angeordnet. Die Brücken-Losräder 110, 112 sind drehbar an der Brückenkupplungswelle 106 gelagert.

Zwischen den Brücken-Losrädern 110, 112 ist ein Schaltkupplungspaket angeordnet, das eine Schaltkupplung E1 zum Verbinden des Brücken-Losrades 110 mit der Brückenkupplungswelle 106 sowie eine Schaltkupplung E2 zum Verbinden des Brücken-Losrades 112 mit der Brückenkupplungswelle 106 aufweist.

Das Brücken-Losrad 110 für die Vorwärtsgangstufe ist in der zweiten Radsatzebene 54 angeordnet. Das Brücken-Losrad 112 für die Rückwärtsgangstufe ist in der ersten Radsatzebene 42 angeordnet.

Das Brücken-Losrad 112 für Rückwärtsgangstufe steht in Eingriff mit einem Drehrichtungsumkehrrad 114, das drehbar an einer Drehrichtungsumkehrwelle 116 gelagert ist. Das Drehrichtungsumkehrrad 114 steht ferner in Eingriff mit dem Festrad 48 für die Rückwärtsgangstufe 3. Das Drehrichtungsumkehrrad 114 ist ebenfalls in der ersten Radsatzebene angeordnet. Das Drehrichtungsumkehrrad kann jedoch auch als Doppel-Drehrichtungsumkehrrad ausgebildet sein, wobei ein Zahnrad des Doppel-Drehrichtungsumkehrrades mit dem Brücken-Losrad 112 für die Rückwärtsgangstufe in Eingriff steht und wobei das zweite Zahnrad des Doppel-Drehrichtungsumkehrrades mit einem Zahnrad in Eingriff steht, das als Festrad an der zweiten Eingangswelle 28 festgelegt ist, vorzugsweise zwischen den Festrädern 48 und 60 und vorzugsweise keiner speziellen Vorwärtsgangstufe zugeordnet.

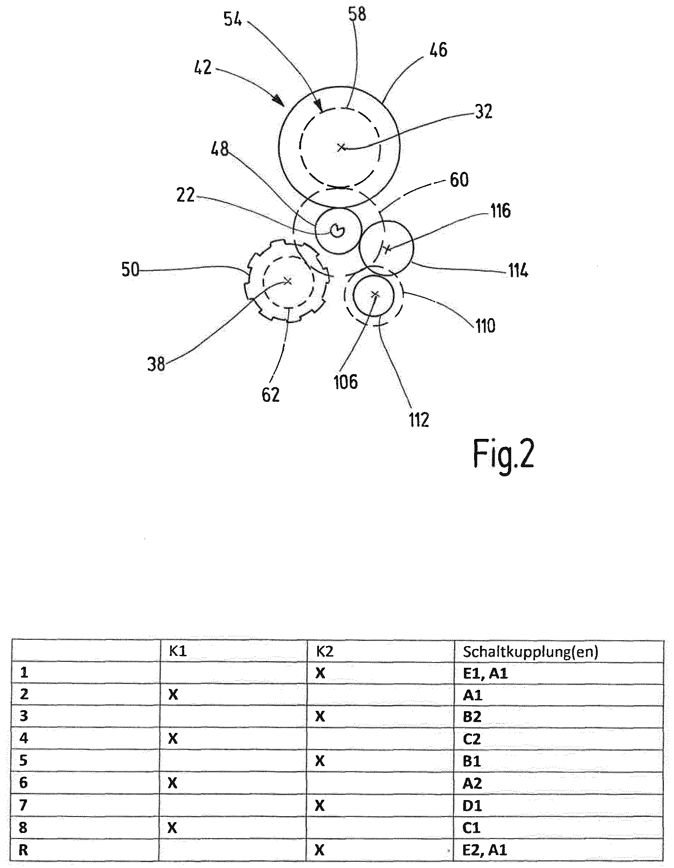

Fig. 2 zeigt in durchgezogenen Linien die Elemente der ersten Radsatzebene 42, nämlich das Losrad 46, das mit dem Festrad 48 in Eingriff steht, das Parksperrenrad, und das Brücken-Losrad 112, das mit dem Drehrichtungsumkehrrad 114 in Eingriff steht, das wiederum mit dem Festrad 48 in Eingriff steht.

Fig. 2 zeigt ferner die zweite Radsatzebene 54 in gestrichelten Linien, einschließlich des Losrades 58, das mit dem Festrad 60 in Eingriff steht, sowie des Losrades 52, das ebenfalls mit dem Festrad 60 in Eingriff steht und einschließlich dem Brücken-Losrad 110, das mit dem Festrad 60 in Eingriff steht.

Fig. 3 zeigt, welche Kupplungen zum Einlegen der Vorwärtsgangstufen 1 bis 8 und der Rückwärtsgangstufe R einzulegen sind. Die Kupplung K2 ist zum Einlegen der Vorwärtsgangstufen 1, 3, 5, 7 und der Rückwärtsgangstufe R zu schließen, wohingegen in diesen Gangstufen die erste Reibkupplung K1 geöffnet ist. Die erste Reibkupplung K1 ist geschlossen, wenn die Vorwärtsgangstufen 2, 4, 6, 8 einzulegen sind.

In der Vorwärtsgangstufe 1, die als Windungsgangstufe ausgebildet ist, sind die Schaltkupplungen E1, A1 geschlossen, alle anderen Schaltkupplungen sind geöffnet. Hierdurch fließt die Leistung von der zweiten Reibkupplung K2 über die zweite Eingangswelle 28, das Festrad 60, das Brücken-Losrad 110 in die Brückenkupplungswelle 106, und von dort über das Brücken-Festrad 108 und das Festrad 72 in die erste Eingangswelle 24, und von dort über den Radsatz 88 für die Vorwärtsgangstufe 2 in die erste Ausgangswelle 32, und von dort über die Abtriebszahnradebene hin zu dem Differential 16.

Bei Einlegen der Vorwärtsgangstufe 2 ist die Reibkupplung K1 geschlossen sowie die Schaltkupplung A1, alle anderen Schaltkupplungen sind geöffnet.

Die Vorwärtsgangstufen 2 bis 8 sind jeweils als Direkt-Gangstufen ausgebildet, bei denen jeweils nur eine Schaltkupplung geschlossen und alle anderen Schaltkupplungen jeweils geöffnet sind.

Die Rückwärtsgangstufe R ist ebenfalls als Windungsgangstufe eingerichtet. Hierbei ist die Reibkupplung K2 geschlossen und die Schaltkupplungen E2, A1 sind geschlossen. Hierbei fließt Leistung wiederum von der zweiten Reibkupplung K2 über das Festrad 48 und das Brücken-Losrad 112 bei geschlossener Kupplung E2 in die Brückenkupplungswelle 106, und von dort über das Brücken-Festrad 108, das Festrad 72 sowie den Radsatz 88 für die Vorwärtsgangstufe 2 in die erste Ausgangswelle 32, und von dort wiederum zu dem ersten Abtriebszahnrad 34.

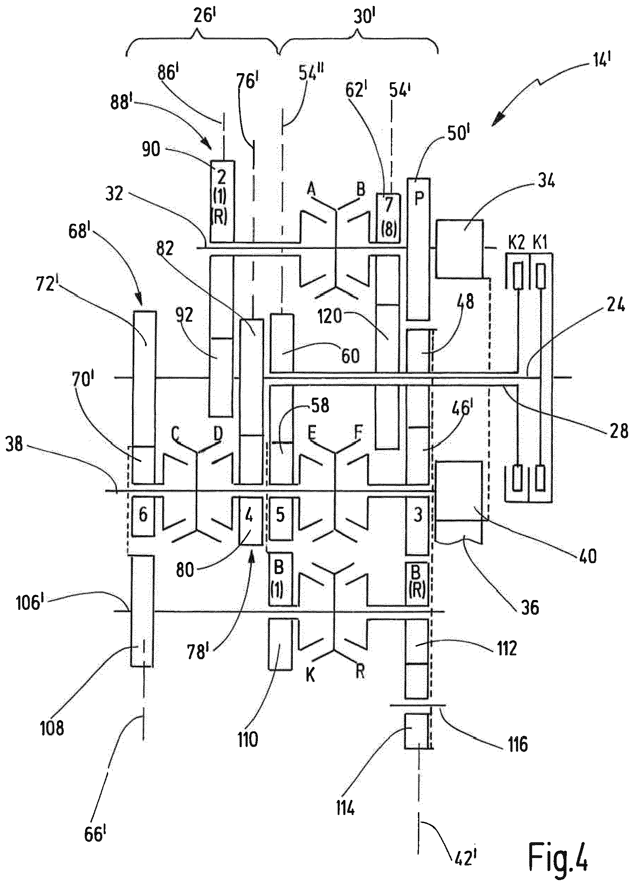

In Fig. 4 ist eine alternative Ausführungsform eines Doppelkupplungsgetriebes 14 beschrieben, das hinsichtlich Ausführung und Funktionsweise generell dem Doppelkupplungsgetriebe 14 der Fig. 1 entspricht. Gleiche Elemente sind daher durch gleiche Bezugszeichen gekennzeichnet. Im Folgenden werden im Wesentlichen Unterschiede erläutert.

Das Doppelkupplungsgetriebe 14' weist ebenfalls eine Abtriebszahnradebene auf, in der Abtriebszahnräder 34 einer ersten Ausgangswelle 32 und 40 einer zweiten Ausgangswelle 38 angeordnet sind und die axial benachbart zu der Reibkupplungsanordnung mit den Reibkupplungen K1, K2.

Benachbart hierzu ist eine erste Radsatzebene 42' angeordnet. In der ersten Radsatzebene 42' ist ein Parksperrenrad 50' angeordnet, das drehfest mit der ersten Ausgangswelle 32 verbunden ist. Ferner beinhaltet die erste Radsatzebene 42 ein Festrad 48 für die Vorwärtsgangstufe 3, das an der zweiten Eingangswelle 28 festgelegt ist, und ein damit in Eingriff stehendes Losrad 46' für die Vorwärtsgangstufe 3. Wie bei der vorherigen Ausführungsform ist in der unmittelbar dem Getriebeeingang zugewandten Radsatzebene 42' das Brücken-Losrad 112 für die Rückwärtsgangstufe angeordnet, und ein damit kämmendes Drehrichtungsumkehrrad 114. Sofern das Drehrichtungsumkehrrad 114 bei der Ausführungsform der Fig. 4 als Doppel-Drehrichtungsumkehrrad ausgebildet ist, steht eines der Zahnräder dieses Doppel-Drehrichtungsumkehrrades mit einem Festrad in Eingriff, das vorzugsweise zwischen den Zahnrädern 60 und 120 (siehe unten) angeordnet ist.

Benachbart hierzu beinhaltet eine zweite Radsatzebene 54' ein Festrad 120, das an der zweiten Eingangswelle 28 festgelegt ist und mit einem Losrad 62' für die Vorwärtsgangstufe 7 in Eingriff steht. Das Losrad 62' ist an der ersten Ausgangswelle 32 drehbar gelagert und ist mittels einer Schaltkupplung B mit der ersten Ausgangswelle 32 verbindbar.

Eine weitere Radsatzebene 54" beinhaltet ein Festrad 60 für die Vorwärtsgangstufe 5, das an der zweiten Eingangswelle 28 festgelegt ist, und ein Losrad 58, das mit dem Festrad 60 in Eingriff steht und drehbar an der zweiten Ausgangswelle 38 gelagert ist. Das Losrad 58 ist mittels einer Schaltkupplung E mit der zweiten Ausgangswelle 38 verbindbar. Die Schaltkupplung E ist mit einer weiteren Schaltkupplung F in ein Schaltkupplungspaket integriert, mittels der das Losrad 46' für die Vorwärtsgangstufe 3 mit der zweiten Ausgangswelle 38 verbindbar ist.

In der weiteren Radsatzebene 54" ist ferner das Brücken-Losrad 110 für die Vorwärtsgangstufe angeordnet. Das Brücken-Losrad 110 ist drehbar an der Brückenkupplungswelle 106' gelagert und mittels einer Kupplung K mit dieser verbindbar. Die Kupplung K ist mit einer weiteren Schaltkupplung R in ein Schaltkupplungspaket integriert, das zwischen den Losrädern 110, 112 angeordnet ist. Die Schaltkupplung R dient zum Verbinden des Brücken-Losrads 112 mit der Brückenkupplungswelle 106'.

Die Radsatzebenen 42', 54', 54" sind dem zweiten Teilgetriebe 30' zugeordnet.

Das erste Teilgetriebe 26' beinhaltet eine Radsatzebene 76', die benachbart ist zu der Radsatzebene 54" und die einen Radsatz 78' für die Vorwärtsgangstufe 4 beinhaltet. In der Radsatzebene 76' sind ein Festrad 82, das fest mit der ersten Eingangswelle 44 verbunden ist und ein Losrad 80 angeordnet, das drehbar an der zweiten Ausgangswelle 38 gelagert ist und das mittels einer Schaltkupplung D mit der zweiten Ausgangswelle 38 verbindbar ist.

Benachbart zu dem Radsatz 76' beinhaltet das erste Teilgetriebe 26' eine Radsatzebene 86', in der ein Radsatz 88' für eine Vorwärtsgangstufe 2 angeordnet ist. Insbesondere beinhaltet der Radsatz 88' ein Festrad 92, das mit der ersten Eingangswelle 24 verbunden ist und ein damit ein Eingriff stehendes Losrad 90, das drehbar an der ersten Ausgangswelle 32 gelagert ist und das mittels einer Schaltkupplung A mit der ersten Ausgangswelle 32 verbindbar ist. Die Schaltkupplung A und die Schaltkupplung B für die Vorwärtsgangstufe 7 sind in ein Schaltkupplungspaket integriert, das in axialer Richtung zwischen den Radsatzebenen 54', 54" angeordnet ist. Ferner ist das Schaltkupplungspaket A, B axial ausgerichtet mit den Schaltkupplungspaketen E, F und K, R.

Das erste Teilgetriebe 26' beinhaltet ferner eine Radsatzebene 66' für die Vorwärtsgangstufe 6. In der Radsatzebene 66' sind ein Festrad 72', das fest mit der ersten Eingangswelle 44 verbunden ist, sowie ein Losrad 70' angeordnet. Das Losrad 70' ist drehbar an der zweiten Ausgangswelle 38 gelagert und mittels einer Schaltkupplung C mit der zweiten Ausgangswelle 38 verbindbar. Die Schaltkupplung C und die Schaltkupplung D sind in ein Schaltkupplungspaket integriert, das zwischen den Losrädern 70', 80 angeordnet ist. Das Schaltkupplungspaket mit den Schaltkupplungen C, D ist in axialer Richtung überschneidend mit der Radsatzebene 86' ausgerichtet.

Das Festrad 72' für die Vorwärtsgangstufe 6 steht ferner in Eingriff mit dem Brücken-Festrad 108, das an der Brückenkupplungswelle 106' festgelegt ist.

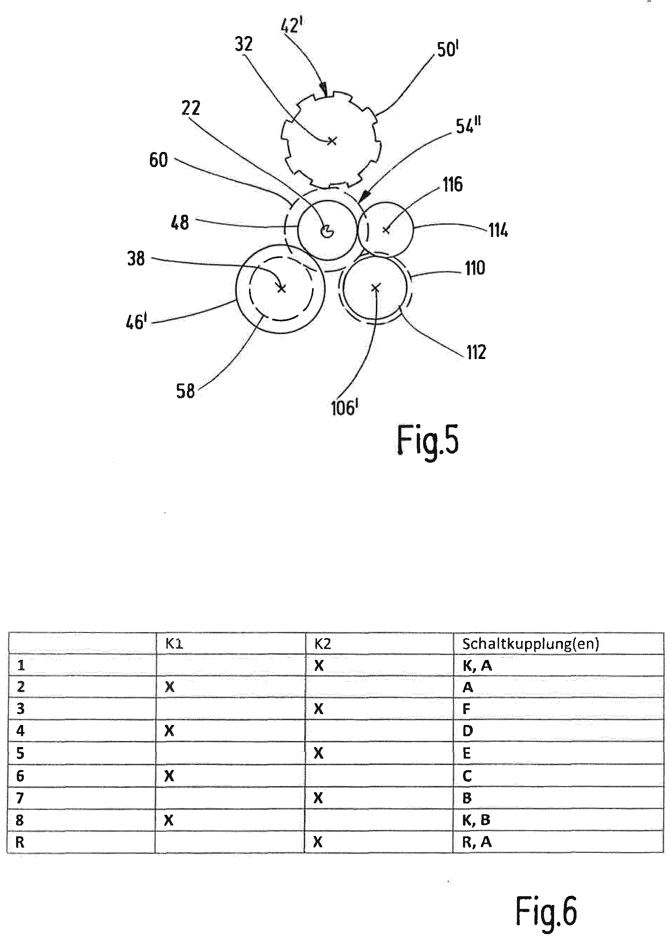

Fig. 5 zeigt in durchgezogenen Linien die Elemente der Radsatzebene 42', einschließlich des Parksperrenrades 50', des Festrades 48, das mit dem Losrad 46' in Eingriff steht, sowie des Brücken-Losrades 112, das mit dem Drehrichtungsumkehrrad 114 in Eingriff steht. Das Drehrichtungsumkehrrad 114 steht wiederum mit dem Festrad 48 in Eingriff.

Fig. 5 zeigt ferner in gestrichelten Linien die Radsatzebene 54", einschließlich des Festrades 60, das mit dem Losrad 58 in Eingriff steht, und einschließlich des Brücken-Losrades 100, das ebenfalls mit dem Festrad 60 in Eingriff steht.

Fig. 6 zeigt eine Tabelle, in der die Zustände der diversen Kupplungen des Doppelkupplungsgetriebes der Fig. 4 gezeigt sind, die in den Vorwärtsgangstufen 1 und 8 und der Rückwärtsgangstufe R einzulegen sind.

Die Reibkupplung K1 wird geschlossen, wenn die Vorwärtsgangstufen 2, 4, 6, 8 einzulegen sind. In entsprechender Weise wird die Reibkupplung K2 geschlossen, wenn die Vorwärtsgangstufen 1, 3, 5 ,7 und die Rückwärtsgangstufe R einzulegen sind.

Die Vorwärtsgangstufen 2 bis 7 sind jeweils als Direkt-Gangstufen ausgebildet, so dass die Gangstufen jeweils durch Betätigen von jeweils einer zugeordneten Schaltkupplung ein- und auslegbar sind, wie es der Tabelle der Fig. 6 zu entnehmen ist.

Die Vorwärtsgangstufe 1 ist als Windungsgangstufe ausgebildet, wobei die Kupplung K für das Brücken-Losrad 110 geschlossen ist sowie die Schaltkupplung A für das Losrad 90 der Vorwärtsgangstufe 2. Die Leistung fließt, wie bei der Ausführungsform der Fig. 1, von der Kupplung K2 über die zweite Eingangswelle 28 und das Festrad 60 in das Brücken-Losrad 110, und von dort über die geschlossene Kupplung K in die Brückenkupplungswelle 106', und von dort weiter über das Brücken-Festrad 108 in das Festrad 72' und in die erste Eingangswelle 24, und von dort über den Radsatz 88' für die Vorwärtsgangstufe 2 bei geschlossener Schaltkupplung A in die erste Ausgangswelle 32, und von dort über das erste Abtriebszahnrad 34 hin zu einem Abtriebsglied 36.

Die Vorwärtsgangstufe 8 ist bei dem Doppelkupplungsgetriebe 14' der Fig. 4 und 5 ebenfalls als Windungsgangstufe ausgebildet, wobei die Schaltkupplungen K und B geschlossen sind.

In diesem Fall ist die Reibkupplung K1 geschlossen, so dass Leistung von der Reibkupplung K1 über die erste Eingangswelle 24 und über die Festräder 72', 108 in die Brückenkupplungswelle 106' fließt. Bei geschlossener Kupplung K fließt die Leistung von dort über das Brücken-Losrad 110 in das Festrad 60 und von dort über das Festrad 120 und das Losrad 62' bei geschlossener Schaltkupplung B in die erste Ausgangswelle 32 und von dort wiederum zu dem ersten Abtriebszahnrad 34.

Der Leistungsfluss zum Einrichten der Rückwärtsgangstufe ist ähnlich wie bei der Vorwärtsgangstufe 1, nämlich von der Reibkupplung K2 über die zweite Eingangswelle 28, die Zahnräder 48, 114, 112 und die geschlossene Schaltkupplung R in die Brückenkupplungswelle 106', und von dort über die Zahnräder 108, 72' sowie den Radsatz 88' für die Vorwärtsgangstufe 2 in die erste Ausgangswelle 32 (bei geschlossener Schaltkupplung A), und von dort hin zu dem ersten Abtriebszahnrad 34.

## Patentansprüche

1. Doppelkupplungsgetriebe (14) mit
- einer Eingangswellenanordnung, die eine erste Eingangswelle (24) und eine zweite Eingangswelle (28) aufweist, wobei die erste Eingangswelle (24) mit einer ersten Reibkupplung (K1) verbunden ist, wobei die zweite Eingangswelle (28) mit einer zweiten Reibkupplung (K2) verbunden ist und wobei die zweite Eingangswelle (28) als Hohlwelle um die erste Eingangswelle (24) herum angeordnet ist,
- einem ersten Teilgetriebe (26), das der ersten Eingangswelle (24) zugeordnet ist, und einem zweiten Teilgetriebe (30), das der zweiten Eingangswelle (28) zugeordnet ist,
- einer ersten Ausgangswelle (32) und einer zweiten Ausgangswelle (38), wobei an der ersten Ausgangswelle (32) ein erstes Abtriebszahnrad (34) festgelegt ist und wobei an der zweiten Ausgangswelle (38) ein zweites Abtriebszahnrad (40) festgelegt ist,
- einer Mehrzahl der Einrichtung von Gangstufen (1-8, R) dienenden Radsätzen, die jeweils die Eingangswellenanordnung (22) mit der ersten Ausgangswelle (32) und/oder mit der zweiten Ausgangswelle (38) verbinden, und
- wenigstens einer Brückenkupplung (E1, E2; K, R), die dazu ausgebildet ist, die erste Eingangswelle (24) und die zweite Eingangswelle (28) miteinander zu verbinden, um wenigstens eine Windungsgangstufe (1, R; 1, 8R) einzurichten,
**dadurch gekennzeichnet, dass**
die Brückenkupplung (E1, E2; K, R) an einer zu den Ausgangswellen (32, 38) und der Eingangswellenanordnung (22) parallel versetzten Brückenkupplungswelle (106) angeordnet ist, die mit der ersten Eingangswelle (24) gekoppelt ist, wobei das erste Teilgetriebe (26) geraden Vorwärtsgangstufen (2, 4, 6, ..) zugeordnet ist.

2. Doppelkupplungsgetriebe nach Anspruch 1, **dadurch gekennzeichnet, dass** eine Vorwärtsgangstufe 1 als Windungsgangstufe ausgebildet ist, bei der Antriebsleistung über einen der Vorwärtsgangstufe 2 zugeordneten Radsatz (88) fließt.

3. Doppelkupplungsgetriebe nach Anspruch 1 oder 2, **dadurch gekennzeichnet, dass** ein Losrad (112) eines Radsatzes zur Einrichtung einer Rückwärtsgangstufe zwangläufig mit einem Zahnrad (48) gekoppelt ist, das an einer Eingangswelle (28) festgelegt ist und/oder das zur Einrichtung einer ungeraden Vorwärtsgangstufe (3) dient.

4. Doppelkupplungsgetriebe nach Anspruch 3, **dadurch gekennzeichnet, dass** das Zahnrad (48) mit einem an einer Drehrichtungsumkehrwelle (116) drehbar gelagerten Drehrichtungsumkehrrad (114) in Eingriff steht, das mit dem Losrad (112) des Radsatzes zur Einrichtung der Rückwärtsgangstufe in Eingriff steht.

5. Doppelkupplungsgetriebe nach Anspruch 3 oder 4, **dadurch gekennzeichnet, dass** der Radsatz zur Einrichtung der ungeraden Vorwärtsgangstufe ein Radsatz für die Vorwärtsgangstufe 3 ist.

6. Doppelkupplungsgetriebe nach einem der Ansprüche 1 bis 5 oder nach dem Oberbegriff des Anspruchs 1, **dadurch gekennzeichnet, dass** ein Parksperrenrad (50; 50') in einer Radsatzebene (42; 42') angeordnet ist, die unmittelbar benachbart ist zu dem ersten und dem zweiten Abtriebszahnrad (34, 40).

7. Doppelkupplungsgetriebe nach einem der Ansprüche 1 bis 6 oder nach dem Oberbegriff des Anspruchs 1, **dadurch gekennzeichnet, dass** an der ersten Ausgangswelle (32), von einem Eingang des Doppelkupplungsgetriebes (14) aus gesehen, ein Losrad (46) für eine Vorwärtsgangstufe 3, ein Losrad (58) für eine Vorwärtsgangstufe 5, ein Losrad (70) für eine Vorwärtsgangstufe 6 und ein Losrad (90) für eine Vorwärtsgangstufe 2 angeordnet sind.

8. Doppelkupplungsgetriebe nach Anspruch 7, **dadurch gekennzeichnet, dass** an der zweiten Ausgangswelle (38), von einem Eingang des Doppelkupplungsgetriebes aus gesehen, ein Parksperrenrad (50), ein Losrad (62) für eine Vorwärtsgangstufe 7, ein Losrad (80) für eine Vorwärtsgangstufe 4 und ein Losrad (100) für eine Vorwärtsgangstufe 8 angeordnet sind.

9. Doppelkupplungsgetriebe nach Anspruch 7 oder 8, **dadurch gekennzeichnet, dass** ein Losrad (58) für die Vorwärtsgangstufe 5 und ein Losrad (62) für eine Vorwärtsgangstufe 7 in einer Radsatzebene (54) angeordnet sind.

10. Doppelkupplungsgetriebe nach einem der Ansprüche 1 bis 6 oder nach dem Oberbegriff des Anspruchs 1, **dadurch gekennzeichnet, dass** an der ersten Ausgangswelle (32), von einem Eingang des Doppelkupplungsgetriebes aus gesehen, ein Parksperrenrad (50'), ein Losrad (62') für eine Vorwärtsgangstufe 7 und ein Losrad (90) für eine Vorwärtsgangstufe 2 angeordnet sind.

11. Doppelkupplungsgetriebe nach Anspruch 10, **dadurch gekennzeichnet, dass** an der zweiten Ausgangswelle (38), von einem Eingang des Doppelkupplungsgetriebes aus gesehen, ein Losrad (46') für die Vorwärtsgangstufe 3, ein Losrad (58) für eine Vorwärtsgangstufe 5, ein Losrad (80) für eine Vorwärtsgangstufe 4 und ein Losrad (70') für eine Vorwärtsgangstufe 6 angeordnet sind.

12. Doppelkupplungsgetriebe nach einem der Ansprüche 1 bis 11, **dadurch gekennzeichnet, dass** die wenigstens eine Brückenkupplung (E1, E2; K, R) an einer zu den Ausgangswellen (32, 38) und der Eingangswellenanordnung (22) parallel versetzten Brückenkupplungswelle (106) angeordnet ist, wobei an der Brückenkupplungswelle (106) ein Brücken-Losrad (122) für eine Rückwärtsgangstufe, ein Brücken-Losrad (110) für eine Vorwärtsgangstufe und ein Brücken-Festrad (108) angeordnet sind, wobei das Brücken-Festrad (108) mit einem Festrad (72; 72') in Eingriff steht, das mit der ersten Eingangswelle (24) fest verbunden ist.

13. Doppelkupplungsgetriebe nach einem der Ansprüche 1 bis 12, **dadurch gekennzeichnet, dass** ein Radsatz für eine Vorwärtsgangstufe 3 benachbart ist zu einem Getriebeeingang.

14. Doppelkupplungsgetriebe nach einem der Ansprüche 1 bis 13, **dadurch gekennzeichnet, dass** das erste Teilgetriebe (26) den geraden Vorwärtsgangstufen (2, 4, 6, ..) zugeordnet ist, wobei das erste Teilgetriebe (26) ausschließlich Radsatzebenen (66, 76, 86, 96; 76', 86', 66') enthält, die jeweils einen einzelnen Radsatz (68, 78, 88, 98; 78', 88', 68') mit einem Festrad und einem einzelnen Losrad aufweisen, das mit dem Festrad in Eingriff steht.
